(19) Europäisches Patentamt
European Patent Office
Office européen des brevets

(11) **EP 3 109 343 A1**

(12) **EUROPEAN PATENT APPLICATION**
published in accordance with Art. 153(4) EPC

(43) Date of publication:
28.12.2016 Bulletin 2016/52

(51) Int Cl.:
*C23C 28/04* (2006.01)   *B32B 15/08* (2006.01)
*B32B 15/20* (2006.01)   *C22C 21/02* (2006.01)
*C22C 21/06* (2006.01)

(21) Application number: 15752384.6

(22) Date of filing: 19.02.2015

(86) International application number:
PCT/JP2015/054693

(87) International publication number:
WO 2015/125897 (27.08.2015 Gazette 2015/34)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 21.02.2014 JP 2014031763

(71) Applicant: Kabushiki Kaisha Kobe Seiko Sho
(Kobe Steel, Ltd.)
Kobe-shi, Hyogo 651-8585 (JP)

(72) Inventors:
• TATSUMI, Akihiko
  Nishi-ku, Kobe-shi
  Hyogo 651-2271 (JP)
• TAKADA, Satoru
  Nishi-ku, Kobe-shi
  Hyogo 651-2271 (JP)

(74) Representative: Müller-Boré & Partner
Patentanwälte PartG mbB
Friedenheimer Brücke 21
80639 München (DE)

(54) **ALUMINUM ALLOY PLATE, JOINED BODY, AND AUTOMOTIVE MEMBER**

(57) Provided is an aluminum alloy plate in which a first film that is formed on at least one surface of an aluminum alloy substrate comprises an oxide film that contains: 0.1 at.% or more but less than 30 at.% of Mg; 5-30 at.% of Si; Cu that is limited to less than 0.6 at.%; and S that is limited to less than 5 at.%. The aluminum alloy plate is unlikely to suffer from decreases in adhesion strength even when exposed to a high-temperature, high-humidity environment and has excellent adhesion durability. In addition, the aluminum alloy plate is used to produce a joined body and an automotive member.

FIG. 1

**Description**

Technical Field

The present invention relates to an aluminum alloy plate, a joined body, and an automotive member. More particularly, the present invention relates to an aluminum alloy plate which includes an oxide film formed on at least one surface thereof, a joined body including this aluminum alloy plate, and an automotive member.

Background Art

Various kinds of aluminum alloy plates are suitably selected in accordance with the properties thereof and used as members of transportation means such as motor vehicles, ships, and aircraft. Due to global environmental issues including $CO_2$ emission control, there recently is a need for improvements in fuel efficiency by reductions in the weight of members, and aluminum alloy plates which have specific gravities about one-third that of iron and which have excellent energy-absorbing properties are coming to be used increasingly.

For example, as automotive members, use is made of Mg-containing aluminum alloy plates such as JIS 5000-series Al-Mg alloy plates and JIS 6000-series Al-Mg-Si alloy plates. As methods for joining these aluminum alloy plates, examples thereof include welding and adhering with an adhesive. There are cases where these methods are used in combination. In contrast to welding, in which aluminum alloy plates are joined by spot or line welding, adhering with an adhesive brings about high joining strength, since aluminum alloy plates are joined over the whole surfaces, and is hence advantageous from the standpoints of collision safety, etc. Because of this, adhering with an adhesive tends to be increasingly employed in recent years for producing automotive members.

Meanwhile, automotive members made of an aluminum alloy and produced through joining with an adhesive have a problem in that in a case where moisture, oxygen; chloride ions, etc. infiltrate into the joined portion during use, the interface between the adhesive layer and each aluminum alloy plate deteriorates gradually to cause interfacial separation, resulting in a decrease in adhesive strength. Investigations have hitherto been hence made on methods for preventing such a decrease in adhesive strength and thereby improving the adhesive durability of an automotive member made of an aluminum alloy and having an adhesive layer (see, for example, Patent Documents 1 to 3).

For example, Patent Document 1 proposes a method in which an aluminum alloy plate is subjected to pickling to thereby remove an Mg-rich layer in a surface of the aluminum alloy plate and to simultaneously cause Cu to concentrate in the surface of the aluminum alloy plate. Patent Document 2 proposes a method in which the amount of the Mg which has concentrated in a surface of an aluminum alloy plate is made to satisfy a specific relationship with the degree of OH absorption. Furthermore, Patent Document 3 proposes a method in which a solution treatment and a warm-water treatment are consecutively performed to thereby regulate the Mg concentration, Si concentration, and OH concentration in a surface layer of an oxide film of the aluminum material.

Furthermore, automotive aluminum and aluminum alloy materials have been proposed in which the base materials have been treated with a silicate-containing aqueous solution to form a silicon-containing film on the surface for the purpose of preventing discoloration or filiform corrosion (see Patent Document 4). Moreover, a method for obtaining the evenness of a zinc phosphate film in an Mg-containing aluminum alloy plate for automotive bodies while maintaining excellent formability has been proposed in which a surface treatment with a silicate is conducted as an example of weak etching (see Patent Document 5).

Prior Art Documents

Patent Documents

Patent Document 1: JP-A-H06-256881
Patent Document 2: JP-A-2006-200007
Patent Document 3: JP-A-2007-217750
Patent Document 4: JP-A-H08-144064
Patent Document 5: JP-A-H07-188956

Summary of the Invention

Problem that the Invention is to Solve

However, the above-described techniques described in Patent Documents 1 to 3 have a problem in that in a case where the automotive member is exposed to a high-temperature moist environment from which moisture, oxygen, chloride ions, etc. penetrate thereinto, the interface deteriorates gradually, resulting in interfacial separation, a decrease in adhesive strength, and accelerated corrosion of the A1. For example, although Patent Document 1 describes that the concentrated Cu enhances the bonding to the adhesive to improve the adhesion, the aluminum alloy plate obtained using this technique may suffer accelerated resin decomposition in moist environments and high adhesive durability cannot be expected. Similarly, the techniques described in Patent Documents 4 and 5 cannot be expected to produce the effect of improving adhesive durability.

A main object of the present invention is to provide an aluminum alloy plate, a joined body, and an automotive member which, even when exposed to high-temperature moist environments, are less apt to decrease in adhesive strength and have excellent adhesive durability.

Means for Solving the Problem

The present inventors diligently made experiments and investigations in order to overcome the problem and, as a result, have discovered the following. The method in which pickling is conducted has a drawback in that since each aluminum alloy plate as a base and the adhesive layer have been bonded to each other with hydrogen bonds, the interface is hydrated when the joined body is exposed to a high-temperature moist environment, resulting in a decrease in bonding force (hydrogen bonding).

The method in which anodization is performed also has a drawback in that since each aluminum alloy plate as a base and the adhesive layer have been bonded to each other basically with hydrogen bonds, the interface is hydrated, when the joined body is exposed to a high-temperature moist environment from which moisture, oxygen, chloride ions, etc. penetrate thereinto, resulting in a decrease in bonding force. In addition, the method in which anodization is performed necessitates a complicated apparatus and a high equipment cost and requires a prolonged time period for film formation, resulting in a decrease in production cost.

Furthermore, the method in which a warm-water treatment is conducted also has a drawback in that since each aluminum alloy plate as a base and the adhesive layer have been bonded to each other with hydrogen bonds, the interface is hydrated and thereby deteriorated gradually when the joined body is exposed to a high-temperature moist environment, resulting in the occurrence of interfacial separation and a decrease in.adhesive strength.

The present inventors hence made investigations on the state of bonding between each of substrate surfaces and an adhesive layer, and have discovered that the decrease in adhesive strength which occurs in high-temperature moist environments can be inhibited by forming, on the surface of a substrate, an oxide film in which the contents of Mg, Si, Cu, and S have specific values. The present invention has been thus achieved.

That is, the aluminum alloy plate in the present invention includes: an aluminum alloy substrate; and a first film formed on at least one surface of the aluminum-alloy substrate and including an oxide film that contains Mg in an amount of 0.1 atomic % or more and less than 30 atomic % and Si in an amount of 5 atomic % or more and 40 atomic % or less and that has a Cu amount regulated to be less than 0.6 atomic % and an S amount regulated to be less than 5 atomic %.

Here, the Mg mount, the Si amount, the Cu amount and the S amount are values measured by Radio Frequency Glow Discharge-Optical Emission Spectroscopy (GD-OES).

A second film may be formed on at least a part of the first film, the second film being different in composition from the first film.

In this case, the second film may have a siloxane bond.

In addition, an amount of the second film may be 0.1 mg/m$^2$ or more and less than 30 mg/m$^2$.

In the aluminum alloy plate in the present invention, an adhesive layer including an adhesive may be formed on the outermost surface on the side where the second film has been formed.

On the other hand, the aluminum-alloy substrate may include an Al-Mg alloy, an Al-Cu-Mg alloy, an Al-Mg-Si alloy, or an Al-Zn-Mg alloy.

The joined body in the present invention uses the above-described aluminum alloy plate.

For example, in the joined body in the present invention, aluminum alloy plates each of which may be the above-described aluminum alloy plate may be joined to each other with an adhesive, so that the surfaces of the aluminum alloy plates where the first film and the second film have been formed face each other.

In addition, another aluminum alloy plate including neither the first film nor the second film or a molded resin object may be joined with an adhesive to the surface of the above-described aluminum alloy plate where the first film and the second film have been formed.

In addition, the above-described aluminum alloy plate including the adhesive layer and the above-described aluminum alloy plate not including the adhesive layer may be joined to each other with the adhesive layer, so that the surface where the adhesive layer has been formed faces the surface where the first film and the second film have been formed.

In addition, another aluminum alloy plate including neither the first film nor the second film or a molded resin object may be joined to the surface of the aluminum alloy plate where the adhesive layer has been formed.

The automotive member in the present invention may be manufactured by using the joined body.

Effects of the Invention

According to the present invention, an aluminum alloy plate which, even when exposed to a high-temperature moist environment, is less apt to decrease in adhesive strength and has excellent adhesive durability can be rendered possible.

Brief Description of the Drawings

[FIG. 1] FIG. 1 is a cross-sectional view which schematically shows the configuration of an aluminum alloy plate according to a first embodiment of the present invention.

[FIG. 2] FIG. 2 is a flowchart which shows a process for producing the aluminum alloy plate shown in FIG. 1.

[FIG. 3] FIG. 3 is a cross-sectional view which schematically shows the configuration of an aluminum alloy plate according to a modification example of the first embodiment of the present invention.

[FIG. 4] FIG. 4 is a flowchart which shows a process for producing the aluminum alloy plate shown in FIG. 3.

[FIG. 5] FIG. 5 is a cross-sectional view which schematically shows a configuration example of a joined body according to a second embodiment of the present invention.

[FIG. 6] FIG. 6A and FIG. 6B are cross-sectional views which schematically show other configuration examples of the joined body according to the second embodiment of the present invention.

[FIG. 7] FIG. 7 is a cross-sectional view which schematically shows still another configuration example of the joined body according to the second embodiment of the present invention.

[FIG. 8] FIG. 8A and FIG. 8B are cross-sectional views which schematically show further configuration examples of the joined body according to the second embodiment of the present invention.

[FIG. 9] FIG. 9A and FIG. 9B are views which schematically show a method for measuring the degree of cohesive failure. FIG. 9A is a side view, and FIG. 9B is a plan view.

Modes for Carrying Out the Invention

Modes for carrying out the present invention will be explained below in detail. The present invention should not be construed as being limited to the embodiments explained below.

(First Embodiment)

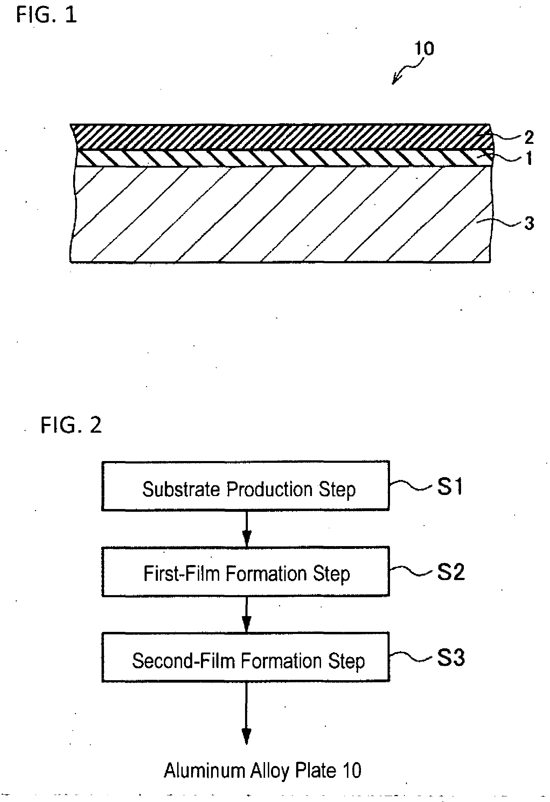

First, an aluminum alloy plate according to a first embodiment of the present invention is explained. FIG. 1 is a cross-sectional view which schematically shows the configuration of an aluminum alloy plate according to this embodiment. As shown in FIG. 1, the aluminum alloy plate 10 according to this embodiment includes an aluminum-alloy substrate 3 and a first film 1 (hereinafter referred to also as "film 1") constituted of an oxide film and formed on at least one surface of the aluminum-alloy substrate 3. According to need, a second film 2 (hereinafter referred to also as "film 2") has been formed on at least a part of the first film 1, the second film 2 being different in composition from the first film 1.

[Substrate 3]

The substrate 3 is made of an aluminum alloy. The kind of the aluminum alloy which constitutes the substrate 3 is not particularly limited, and a aluminum alloy to be used can be suitably selected, in accordance with the intended use of the member into which the aluminum alloy plate is to be processed, from among various non-heat-treatment type or heat-treatment type aluminum alloys which are the aluminum alloys as provided for in JIS or are aluminum alloys similar thereto. Examples of the non-heat-treatment type aluminum alloys include pure aluminum (1000 series), Al-Mn alloys (3000 series), Al-Si alloys (4000 series), and Al-Mg alloys (5000 series). Examples of the heat-treatment type aluminum alloys include Al-Cu-Mg alloys (2000 series), Al-Mg-Si alloys (6000 series), and Al-Zn-Mg alloys (7000 series).

For example, in the case where the aluminum alloy plate 10 according to this embodiment is for use in an automotive member, it is preferable that the substrate 3 should have a 0.2% proof stress of 100 MPa or more, from the standpoint of strength. Examples of aluminum alloys capable of forming a substrate which satisfies such properties include ones which contains magnesium in a relatively large amount, such as the 2000 series, 5000 series, 6000 series, and 7000 series. These alloys may be heat-treated according to need. It is preferred to use a 6000-series aluminum alloy among various aluminum alloys, because this aluminum alloy has excellent age hardening properties and because this aluminum alloy has relatively low alloying-element contents and are hence excellent also in terms of scrap recyclablility and formability.

[Film 1]

The film 1 is an oxide film (aluminum oxide film) which contains Mg in an amount of 0.1 atomic % or more and less than 30 atomic % and Si in an amount of 5 atomic % or more and 40 atomic % or less and which has a Cu amount regulated so as to be less than 0.6 atomic % and an S amount regulated so as to be less than 5 atomic %. This film 1 has been disposed in order to improve the adhesive durability of the aluminum alloy plate exposed to high-temperature moist environments. The reasons for limiting the numerical range of each component contained in the film 1 are explained below.

<Mg: 0.1 atomic % or more and less than 30 atomic %>

The aluminum alloy which constitutes the substrate of the aluminum alloy plate usually contains magnesium as an alloying component. In a case where an oxide film which is a mixed oxide of aluminum and magnesium is formed on a surface of such a substrate 3, magnesium comes into the state of having concentrated in the surface. Because of this, in a case where an adhesive layer is formed on this oxide film, the magnesium in the surface constitutes a weak boundary layer at the adhesive interface, resulting in a decrease in initial adhesion.

Meanwhile, in high-temperature moist environments from which moisture, oxygen, chloride ions, etc. penetrate, the magnesium is causative of the hydration of the interface between the oxide film and the adhesive layer and of dissolution of the substrate, thereby reducing the adhesive durability of the aluminum alloy plate. Specifically, in a case where the Mg content in the oxide film is 30 atomic % or more, the aluminum alloy plate has reduced adhesive durability. Consequently, in the aluminum alloy plate 10 according to this embodiment, the Mg content in the first film 1, which is constituted of an oxide film, is regulated so as to be less than 30 atomic %. Thus, the adhesive durability can be improved. From the standpoint of improving the adhesive durability, the Mg content of the film 1 is preferably less than 20 atomic %, more preferably less than 10 atomic %.

Meanwhile, as the lower limit of the Mg content of the film 1, it is 0.1 atomic % or more from the standpoint of profitability. The Mg content of the film 1 can be determined by Radio Frequency Glow Discharge-Optical Emission Spectroscopy (GD-OES).

Methods for regulating the Mg content of the film 1 are not particularly limited.

For example, use can be made of a method in which the surface is treated with an acid such as nitric acid, sulfuric acid, or hydrofluoric acid, a mixture of such acids, or an alkali solution containing any of potassium hydroxide, sodium hydroxide, silicates, carbonates, and the like. This method is intended to dissolve the magnesium in the acid or alkali solution to thereby regulate the Mg content of the film 1 (oxide film), and the amount of Mg in the film 1 can be made to be in the range shown above, by regulating the treatment period, temperature, and concentration and pH of the surface-treating liquid.

<Si: 5 to 40 atomic %>

The silicon is present in the form of silicates, and has the effect of stabilizing the surface of the first film 1. Furthermore, in the case where the second film 2 is a film having siloxane bonds, the silicon has the effect of improving adhesiveness to the second film. It is therefore possible to enhance the adhesive durability by incorporating silicon into the first film 1.

However, in a case where the content of Si in the film 1 is less than 5 atomic %, the effects described above are not obtained. Meanwhile, in a case where the Si content exceeds 40 atomic %, this results in a decrease in spot weldability and a decrease in evenness of chemical conversion treatment. Consequently, in the aluminum alloy plate 10 according to this embodiment, the content of Si in the first film 1, which is constituted of an oxide film, is 5 to 40 atomic %.

From the standpoint of improving the adhesive durability, the content of Si in the film 1 is preferably 8 atomic % or more, more preferably 10 atomic % or more. From the standpoints of spot weldability and the evenness of chemical conversion treatment, the content of Si in the film 1 is preferably 35 atomic % of less, more preferably 30 atomic % or less.

The Si content of the first film 1 can be controlled by treating the oxide film, before the formation of the second film 2, with an aqueous solution which contains a silicate, such as, for example, sodium silicate or potassium silicate, in an amount exceeding 0.1 mass%. The pH of this treating liquid is not particularly limited. However, since use of liquids which are not alkaline has the possibility of causing a precipitate, it is preferred to regulate the pH of the treating liquid to 10.5 or more.

<Cu: less than 0.6 atomic %>

In a case where the substrate 3 is excessively etched, for example, by a degreasing step or a pickling step in preparation for the formation of the first film 1, the Cu contained in the substrate 3 concentrates in the surface, resulting in an increase in the Cu content of the first film 1. The presence of Cu in the surface of the first film 1 lowers the adhesiveness to the second film 2. This decrease in adhesiveness due to the Cu contained in the first film 1 is serious especially when the second film 2 is a film having siloxane bonds.

Consequently, in the aluminum alloy plate according to this embodiment, the amount of Cu to be contained in the first film 1 is regulated so as to be less than 0.6 atomic %. From the standpoint of improving the adhesiveness to the second film 2, the content of the Cu in the first film 1 is preferably less than 0.5 atomic %, more preferably less than 0.4 atomic %.

Methods for regulating the content of Cu in the first film 1 are not particularly limited. For example, the content thereof can be made to be less than 0.6 atomic % by changing the Cu content of the substrate 3, treatment temperature and treatment period in a cleaning step, pH of the treating liquid, etc. In a case where Cu has concentrated in the surface of the substrate 3 as a result of cleaning, etc., use may be made of a method in which before the formation of a second film 2, the first film 1 is treated with an aqueous solution of a silicate to thereby reduce the Cu content of the film 1 to less than 0.6 atomic %.

<S: less than 5 atomic %>

In a case where sulfur is present in the surface of the first film 1, the sulfur lessens the bonding with the second film 2, resulting in a decrease in adhesive durability. This decrease in adhesive durability due to sulfur is serious especially when the second film 2 is a film having siloxane bonds. Specifically, in a case where the content of S in the film 1 is 5 atomic % or more, sufficient adhesive durability is not obtained. Consequently, the S content of the film 1 is regulated so as to be less than 5 atomic %. From the standpoint of improving the adhesive durability, the content of S in the film 1 is preferably less than 4 atomic %, more preferably less than 3 atomic %.

The sulfur contained in the first film 1 is derived from sulfur-containing ingredients, such as sulfate ions, sulfite ions, and phosphonic acid, which are contained in the treating liquid used for forming the first film 1. Consequently, one possible measure for regulating the content of S in the film 1 to a value within the range shown above may be not to use an alkaline degreasing agent or pickling agent which contains either a sulfate or sulfuric acid, when the first film 1 is formed. Alternatively, in the case where an alkaline degreasing agent or pickling agent which contains a sulfate and/or sulfuric acid has been used, a possible measure for the S content regulation may be to treat the oxide film with an aqueous solution which contains a silicate, before a second film 2 is formed. By applying these methods, the S content of the film 1 can be regulated so as to be less than 5 atomic %.

<Other Components>

The components which can be contained in the film 1, besides magnesium, silicon, copper, and sulfur, are oxygen, aluminum, and unavoidable impurities. The content of O in the film 1 is preferably 15 to 80 atomic %, and the content of A1 therein is preferably 15 to 80 atomic %. Examples of the unavoidable impurities include C, N, Ca, Fe, Mn, Ti, Zn, and Ni. Inclusion of C in an amount of less than 10 atomic % is permissible, and inclusion of N in an amount of less than 15 atomic % is permissible. Inclusion of other impurities is permissible so long as the content thereof is less than 7 atomic %.

<Film Thickness>

It is preferable that the film 1 (oxide film) should have a thickness of 1 to 30 nm. In a case where the thickness of the film 1 is less than 1 nm, ester components contained in a rust preventive oil used when producing the substrate 3 and contained in a press oil used when manufacturing a joined body or automotive member from the aluminum alloy plate 10 are inhibited from being adsorbed. Because of this, even without the film 1 (oxide film), it is possible to ensure the degreasability, suitability for chemical conversion treatment, and adhesive durability of the aluminum alloy plate 10. However, for regulating the thickness of the film 1 to less than 1 nm, it is necessary to conduct excessive pickling or the like, and this is prone to result in poor production efficiency and a decrease in practicability. In addition, excessive pickling causes the Cu contained in the substrate 3 to concentrate in the surface and is hence causative of a decrease in adhesive durability.

Meanwhile, in a case where the thickness of the film 1 exceeds 30 nm, the amount of the film is too large and the surface thereof is prone to have irregularities. In a case where the flm 1 has surface irregularities, this aluminum alloy plate, when used in, for example, an automotive application and subjected to a chemical conversion treatment performed before a coating step, is prone to have unevenness in chemical conversion. Namely, the surface irregularities result in a decrease in suitability for chemical conversion. From the standpoints of suitability for chemical conversion, production efficiency, etc., it is preferable that the thickness of the film 1 (oxide film) should be 3 nm or more and less than 20 nm.

[Film 2]

The second film 2 may be any film which is different in composition from the first film 1. From the standpoint of adhesive durability, however, it is preferable that the second film 2 should be a film which has siloxane bonds. It is also preferable that the second film 2 should have been thinly and evenly formed on the film 1. The second film 2 may have been disposed so as to form a pattern of islands on the film 1.

However, too small amounts of the film 2 result in enhanced influences of the elements present in the surface of the substrate 3, while too large amounts of the film 2 result in a possibility that the film 2 itself might suffer cohesive failure to reduce the adhesive durability. Consequently, it is preferable, from the standpoint of improving the adhesive durability, that the amount of the film 2 should be regulated to 0.1 mg/m$^2$ or more and less than 30 mg/m$^2$. The amount of the film 2 is more preferably less than 23 mg/m$^2$, even more preferably less than 15 mg/m$^2$.

[Production Process]

Next, a process for producing the aluminum alloy plate according to this embodiment is explained. FIG. 2 is a flowchart which shows a process for producing the aluminum alloy plate 10 according to this embodiment. As shown in FIG. 2, a substrate production step S1 and a first-film formation step S2 are conducted when producing the aluminum alloy plate 10 according to this embodiment, and a second-film formation step S3 is conducted according to need. Each step is explained below.

<Step S1: substrate production step>

In the substrate production step S1, a substrate 3 is produced, for example, in the following manner. First, an aluminum alloy having a given composition is melted and cast, by continuous casting, to produce an ingot (melting/casting step). Next, the ingot produced is subjected to a homogenizing heat treatment (homogenizing heat treatment step). Thereafter, the ingot which has undergone the homogenizing heat treatment is hot-rolled to produce a hot-rolled plate (hot rolling step). Subsequently, this hot-rolled plate is subjected to rough annealing or process annealing at 300 to 580°C and is then cold-rolled at least once so as to result in a final cold rolling reduction of 5% or more, thereby obtaining a cold-rolled plate (substrate 3) having a given thickness (cold rolling step).

In the cold rolling step, it is preferred to regulate the temperature for the rough annealing or process annealing to 300°C or more. This temperature regulation enhances the effect of improving the formability. It is also preferred to regulate the temperature for the rough annealing or process annealing to 580°C or lower, and this temperature regulation makes it easy to inhibit the decrease in formability due to burning. Meanwhile, it is preferred to regulate the final cold rolling reduction to 5% or more, and this regulation enhances the effect of improving the formability. Conditions for the homogenizing heat treatment and hot rolling are not particularly limited, and these steps can be conducted under conditions commonly used for obtaining hot-rolled plates. The process annealing may be omitted.

<Step S2: first-film formation step>

In the first-film formation step, a first film 1 constituted of an oxide film is formed on the front surface or back surface or both surfaces of the substrate 3 produced in step S 1, i.e., the substrate production step. Specifically, the substrate 3 is heat-treated to form an oxide film and this oxide film is subjected to a surface treatment so that the Mg amount, Si amount, Cu amount, and S amount thereof come to be in specific ranges.

In the heat treatment, the substrate 3 is heated to 400 to 580°C to form an oxide film which constitutes the first film 1, on a surface of the substrate 3. The heat treatment further has the effect of regulating the strength of the aluminum alloy plate 10. This heat treatment is a solution treatment in the case where the substrate 3 is made of a heat-treatment type aluminum alloy, and is a heat treatment performed during annealing (final annealing) in the case where the substrate 3 is made of a non-heat-treatment type aluminum alloy.

From the standpoint of improving the strength, it is preferable that this heat treatment should be rapid heating performed at a heating rate of 100 °C/min or more. By setting the heating temperature at 400°C.or more to conduct rapid heating, the strength of the aluminum alloy plate 10 and the strength of this aluminum alloy plate 10 which has undergone post-coating heating (baking) can be rendered more. Meanwhile, by setting the heating temperature at 580°C or lower to conduct rapid heating, the decrease in formability due to burning can be inhibited. Furthermore, from the standpoint of improving the strength, it is preferable that the holding time in the heat treatment should be 3 to 30 seconds. In a case where the substrate 3 is thus heated at a heating temperature of 400 to 580°C, an oxide film having a thickness of, for example, 1 to 30 nm is formed on the surface of the substrate 3.

The surface treatment of the oxide film formed by the method described above is conducted in order to regulate the Mg amount, Si amount, Cu amount, and S amount of the first film 1 so as to be in specific ranges. Specifically, acids such as nitric acid, sulfuric acid, and hydrofluoric acid, mixtures of such acids, alkali solutions containing sodium hydroxide, potassium hydroxide, a silicate, a carbonate, or the like, acids (or mixed acids each.obtained by mixing two or more acids) which contain Si, Zr, Ti, Hf, V, Nb, Ta, Cr, Mo, and W in the form of an ion or salt, and an alkali solution (including a solution of a mixture of two or more alkalis) which contains those elements in the form of an ion or salt are used either alone or in combination to treat the oxide film formed on the surface of the substrate 3.

In the first-film formation step, i.e., step S1, the regulations of the Mg amount, Si amount, and S amount in the first film 1 may be performed by one treatment or may be separately performed. Specifically, use may be made of a method in which the oxide film is subjected to any of the treatments described above to regulate the Mg amount and is then treated with an aqueous solution containing a silicate in an amount exceeding 0.1 mass%, thereby regulating the Si amount and the S amount.

Excessive etching of the copper-containing aluminum alloy causes the copper to concentrate in the surface of the substrate 3, and this copper concentration is causative of a deterioration of the adhesive resin in high-temperature moist environments, which are deteriorating environments. Consequently, in the case of performing that treatment, it is necessary to suitably regulate the treatment conditions.

<Step S3: second-film formation step>

In step S3, which is a second-film formation step, a second film 2 that, for example, has siloxane bonds is formed. This second film 2 can be formed, for example, by using a silane coupling agent having a reactive functional group such as an amino group, epoxy group, methacrylic group, vinyl group, and mercapto group. The functional group of the silane coupling agent for forming the second film 2 is not limited to those shown above, and a suitable one selected form silane coupling agents having various functional groups can be used.

It is preferable that the silane coupling agent should be applied in an amount of 0.1 mg/m$^2$ or more and less than 30 mg/m$^2$ per surface in terms of the amount of the dry film, from the standpoint of improving the adhesive durability. The amount of the film 2 to be formed can be easily controlled, for example, by diluting the silane coupling agent with a solvent (which may be water besides an organic solvent) to lower the solid concentration or viscosity thereof or by regulating the application amount thereof on a wet basis by changing coater number.

Methods for applying the silane coupling agent are not particularly limited, and existing methods can be applied. Specifically, use can be made of a method in which the silane coupling agent is applied by dipping, a method in which any of various coating machines is used, such as a roll coater, bar coater, gravure coater, micro-gravure coater, reverse gravure coater, or dip coater, a method of application by spray coating, etc.

The material of the second film 2 is not limited to ones having siloxane bonds. The second film 2 can be formed from a material selected from among various materials in accordance with required properties. For example, a film having no siloxane bonds can be formed from zinc phosphate, a metal oxide such as Ti oxide or Zr oxide, an organic phosphonic acid, or the like.

<Other Steps>

In the steps for producing the aluminum alloy plate 10 according to this embodiment, other steps may be performed between the steps described above or before or after the steps, unless the steps described above are adversely affected thereby. For example, a preliminary ageing treatment step for giving a preliminary aging treatment may be conducted after the second-film formation step S3. It is preferable that this preliminary aging treatment should be conducted in such a manner that within 72 hours, low-temperature heating for 8 to 36 hours is conducted at 40 to 120°C. By conducting the preliminary aging treatment under these conditions, the formability and the strength of the aluminum alloy plate 10 which has undergone baking can be improved. Other steps which may be performed include, for example, a foreign matter removal step for removing foreign matter form the surfaces of the aluminum alloy plate 10 and a defective removal step for removing defectives yielded in each step.

The surfaces of the aluminum alloy plate 10 produced are coated with a press oil before being subjected to production of a joined body or before being processed into an automotive member. Mainly used as the press oil is one which contains an ester component. Methods for applying the press oil to the aluminum alloy plate 10 and conditions therefor are not particularly limited, and common methods and conditions for press oil application can be widely used. For example, immersion of the aluminum alloy plate 10 in a press oil which contains ethyl oleate as an ester component suffices. The ester component is not limited to ethyl oleate, and various ester components including butyl stearate and sorbitan monostearate can be utilized.

As described above in detail, since the aluminum alloy plate 10 according to this embodiment includes an oxide film (film 1) which contains magnesium in a specific amount, the aluminum alloy plate 10 can be inhibited from suffering dissolution of the aluminum-alloy substrate 3 and the surface of the substrate 3 can hence be inhibited from being alkalified. Consequently, adhesive resin deterioration can be inhibited. Furthermore, since the aluminum alloy plate 10 according to this embodiment has been configured so that the film 1 not only contains silicon in a specific amount but also has a Cu amount regulated to less than 0.6 atomic % and an S amount regulated to less than 5 atomic %, improved adhesion is attained between the film 1 and the film 2. As a result, even when exposed to a high-temperature moist environment, the aluminum alloy plate 10 is inhibited from suffering interfacial separation and can be inhibited, over a long period, from decreasing in adhesive strength.

Conventional aluminum alloy plates have had a drawback in that in a case where the substrate 3 is formed from an alloy species having a relatively high Mg content, the Mg is prone to concentrate in the surface of the substrate 3 to form a weak boundary layer at the adhesive interface. In contrast, the aluminum alloy plate 10 according to this embodiment can be inhibited from suffering interfacial separation and from decreasing in adhesive strength, even when the substrate 3 is made of an Al-Mg alloy, Al-Cu-Mg alloy, Al-Mg-Si alloy, Al-Zn-Mg alloy, or the like, since the Mg amount of the first film 1 has been regulated so as to be in a specific range.

The above-described techniques described in Patent Documents 4 and 5 also involve a surface treatment in which a silicate is used. However, the technique described in Patent Document 4 includes no limitation on Mg amount, which affects adhesive durability, while the technique described in Patent Document 5 involves weak etching and, hence, results in insufficient removal of MgO. Consequently, neither of these techniques brings about the effect of improving adhesive durability such as that produced by the present invention.

(Modification Example of the First Embodiment)

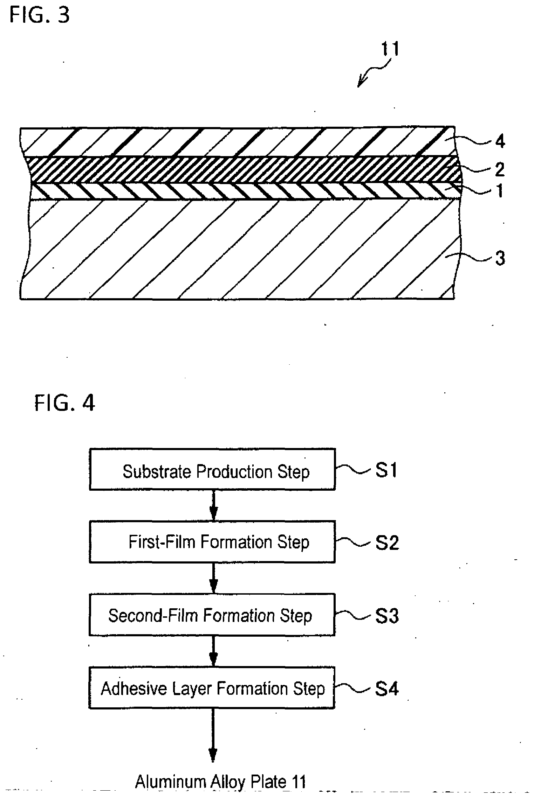

Next, an aluminum alloy plate according to a modification example of the first embodiment of the present invention is explained. FIG. 3 is a cross-sectional view which schematically shows the configuration of an aluminum alloy plate of this modification example. In FIG. 3, the same constituent elements as in the aluminum alloy plate 10 shown in FIG. 1 are designated by the same reference numerals, and detailed explanations thereon are omitted here. As shown in FIG. 3, in the aluminum alloy plate 11 of this modification example, an adhesive layer 4 constituted of an adhesive has been formed so as to cover the first film 1 and second film 2 of the aluminum alloy plate according to the first embodiment described above.

[Adhesive layer 4]

The adhesive layer 4 is constituted of an adhesive, and the aluminum alloy plate 11 of this modification example is joined to another aluminum alloy plate with this adhesive layer 4. The adhesive which constitutes the adhesive layer 4 is not particularly limited, and use can be made of an adhesive which has conventionally been used for joining aluminum alloy plates, such as a thermosetting type epoxy resin, acrylic resin, or urethane resin.

The thickness of the adhesive layer 4 also is not particularly limited. However, the thickness thereof is preferably 10 to 500 μm, more preferably 50 to 400 μm. When the thickness of the adhesive layer 4 is less than 10 μm, there are cases where high adhesive durability is not obtained when this aluminum alloy plate 11 and an aluminum alloy plate includes no adhesive layer are joined to each other with the adhesive layer 4. Meanwhile, when the thickness of the adhesive layer 4 exceeds 500 μm, there are cases where a decrease in adhesive strength results.

[Production Process]

Next, a process for producing the aluminum alloy plate 11 according to this modification example is explained. FIG. 4 is a flowchart which shows a process for producing the aluminum alloy plate 11 according to this modification example. As shown in FIG. 4, when producing the aluminum alloy plate 11 of this modification example, an adhesive layer formation step S4 is conducted besides steps S1 to S3 described above.

[Step S4: adhesive layer formation step]

In the adhesive layer formation step S4, an adhesive layer 4 constituted of an adhesive is formed so as to cover the first film 1 and the second film 2. Methods for forming the adhesive layer 4 are not particularly limited. In the case where the adhesive is solid, examples of methods for forming the adhesive layer 4 include: a method in which the adhesive is heated and press-bonded; and a method in which the adhesive is dissolved in a solvent and this solution is sprayed or otherwise applied on the surface of the film 1 and film 2. In the case where the adhesive is liquid, examples of methods for adhesive layer formation include a method in which this adhesive as such is sprayed or otherwise applied on the surface of the film 1 and film 2.

In the case of the aluminum alloy plate 11 of this modification example also, a preliminary aging treatment step for giving a preliminary aging treatment may be conducted after the first-film formation step S1 and the second-film formation step S2 and/or after the adhesive layer formation step S4, as in the first embodiment described above.

Since the aluminum alloy plate of this modification example includes an adhesive layer formed beforehand, operations such as application of an adhesive to a surface of an aluminum alloy plate in preparation for manufacturing a joined body or automotive member can be omitted. The configurations and effects of the aluminum alloy plate of this modification example, other than those.described above, are the same as in the first embodiment described above.

(Second Embodiment)

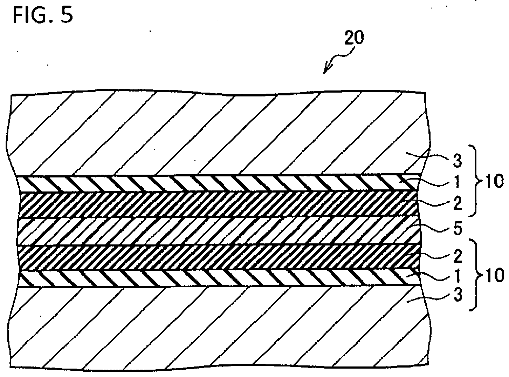

Next, a joined body according to a second embodiment of the present invention is explained. The joined body according to this embodiment employs the aluminum alloy plate according to the first embodiment or modification example thereof described above. FIGs. 5 to 8 are cross-sectional views which schematically show configuration examples of the joined body according to this embodiment. In FIGs. 5 to 8, the same constituent elements as in the aluminum alloy plates 10 and 11 shown in FIGs. 1 and 3 are designated by the same reference numerals, and detailed explanations thereon are omitted here.

[Configurations of the Joined Body]

The joined body according to this embodiment can, for example, have a configuration obtained by disposing two aluminum alloy plates 10 each shown in FIG. 1, so that those surfaces of the aluminum alloy plates 10 which each include the first film 1 and second film 2 face each other, and joining the two aluminum alloy plates 10 to each other with an adhesive 5, like the joined body shown in FIG. 5. Namely, in this joined body 20, one surface of the adhesive 5 has been joined to the film 2 of one aluminum alloy plate 10 and the other surface thereof has been joined to the film 2 of the other aluminum alloy plate 10.

Here, the adhesive 5 in the joined body according to this embodiment can be one which is the same as the adhesive which constitutes the adhesive layer 4 described above. Specifically, as the adhesive 5, use can be made of a thermosetting type epoxy resin, acrylic resin, urethane resin, or the like. The thickness of the adhesive 5 is not particularly limited. However, from the standpoint of improving the adhesive strength, the thickness thereof is preferably 10 to 500 $\mu$m, more preferably 50 to 400 $\mu$m.

In the joined body 20, each surface of the adhesive 5 faces the first film 1 and second film 2 of an aluminum alloy plate 10 according to the first embodiment, as described above. Because of this, in a case where this joined body 20 is used as an automotive member and even when the automotive member is exposed to a high-temperature moist environment, the interface between the adhesive 5 and the films 1 and 2 on each side is less apt to suffer a decrease in adhesive strength, resulting in an improvement in adhesive durability. In addition, the joined body 20 according to this embodiment shows improved interfacial adhesive durability regardless of the kind of the adhesive 5, even when any of various kinds of adhesives conventionally in use for joining aluminum alloy plates is used.

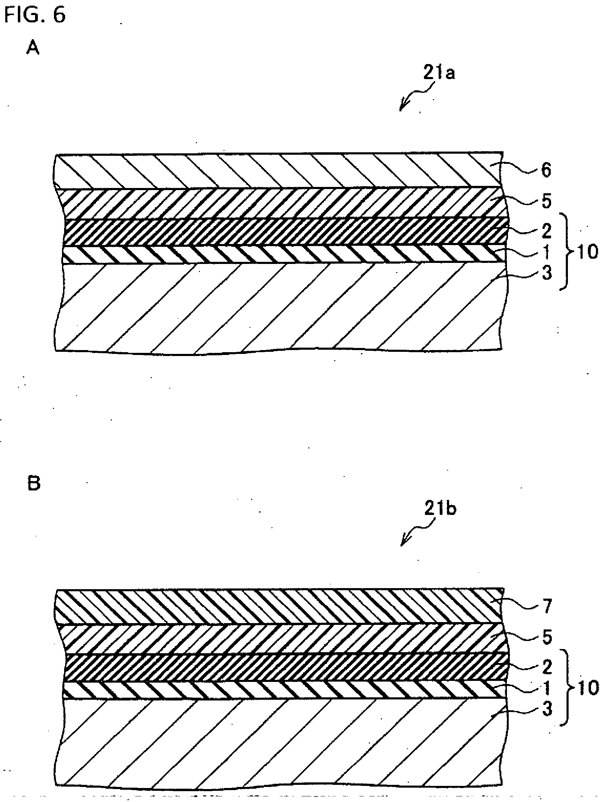

Also possible is a configuration in which another aluminum alloy plate 6 including neither a first film nor a second film or a molded resin object 7 has been joined with an adhesive 5, to the surface of the aluminum alloy plate 10 shown in FIG. 1 where the first film 1 and the second film 2 have been formed, as in the joined body 21 a shown in FIG. 6A or the joined body 21b shown in FIG. 6B.

As another aluminum alloy plate 6 including neither a first film nor a second film, use can be made of one which is the same as the substrate 3 described above. Specifically, use can be made of substrates made of various non-heat-treatment type or heat-treatment type aluminum alloys which are the aluminum alloys as provided for in JIS or are aluminum alloys similar thereto.

As the molded resin object 7, use can be made, for example, of a molded fiber-reinforced-plastic object formed from any of various fiber-reinforced plastics such as glass-fiber-reinforced plastics (GFRP), carbon-fiber-reinforced plastics (CFRP), boron-fiber-reinforced plastics (BFRP), aramid-fiber-reinforced plastics (AFRP, KFRP), polyethylene-fiber-reinforced plastics (DFRP), and Zylon-reinforced plastics (ZFRP). Use of these molded fiber-reinforced-plastic objects makes it possible to reduce the weight of the joined body while maintaining certain strength.

Besides the fiber-reinforced plastics shown above, engineering plastics which have not been fiber-reinforced can be used for the molded resin object 7. Examples of such engineering plastics include polypropylene (PP), acrylic/butadiene/styrene copolymer (ABS) resins, polyurethanes (PU), polyethylene (PE), poly(vinyl chloride) (PVC), nylon-6, nylon-6,6, polystyrene (PS), poly(ethylene terephthalate) (PET), polyamides (PA), poly(phenylene sulfide) (PPS), poly(butylene terephthalate) (PBT), and polyphthalamide (PPA).

In each of the joined bodies 21a and 21b shown in FIG. 6A and FIG. 6B, one surface of the adhesive 5 has been joined to the surface where the first film 1 or the second film 2 has been formed. Because of this, in a case where the joined bodies 21 a and 21 b are used as automotive members and even when the automotive members are exposed to a high-temperature moist environment, an improvement in interfacial adhesive durability is attained regardless of the kind of the adhesive, as in the case of the joined body 20 described above. Furthermore, since the joined body 21 b shown in FIG. 6B is a joined body obtained by joining the aluminum alloy plate 10 to a molded resin object 7, this joined body 21b is lightweight as compared with joined bodies each obtained by joining aluminum alloy plates to each other and use of this joined body 21b makes it possible to attain a further weight reduction in motor vehicles. The configurations and effects of the joined bodies 21a and 21b shown in FIG. 6A and FIG. 6B, other than those shown above, are the same as in the joined body 20 shown in FIG. 5.

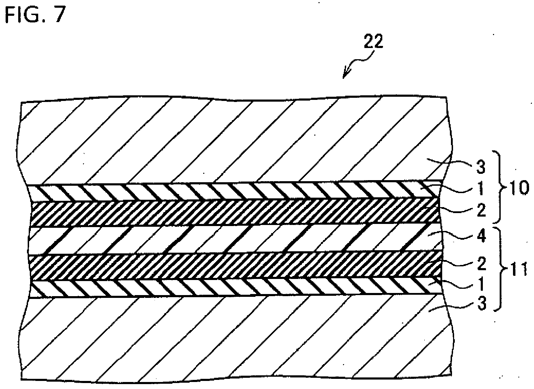

In another configuration, the aluminum alloy plate 11 shown in FIG. 3, which includes an adhesive layer 4, has been joined to the aluminum alloy plate 10 shown in FIG. 1, which includes no adhesive layer 4, as in the joined body 22 shown in FIG. 7. Specifically, in this joined body, the film 1 and film 2 of the aluminum alloy plate 10 have been joined to that surface of the aluminum alloy plate 11 where the adhesive layer 4 is present. As a result, this joined body has a configuration in which the two aluminum alloy plates 10 and 11 have been disposed so that the films 1 or the film 2 face each other with the adhesive layer 4 of the aluminum alloy plate 11.

In the joined body 22, each of both surfaces of the adhesive layer 4 has been joined to the surface where the first film 1 and the second film 2 have been formed. Because of this, in a case where this joined body 22 is used as an automotive member and even when the automotive member is exposed to a high-temperature moist environment, an improvement in interfacial adhesive durability is attained regardless of the kind of the adhesive, as in the case of the joined body 20 described above. The configurations and effects of the joined body 22 shown in FIG. 7, other than those described above, are the same as in the joined body 20 shown in FIG. 5.

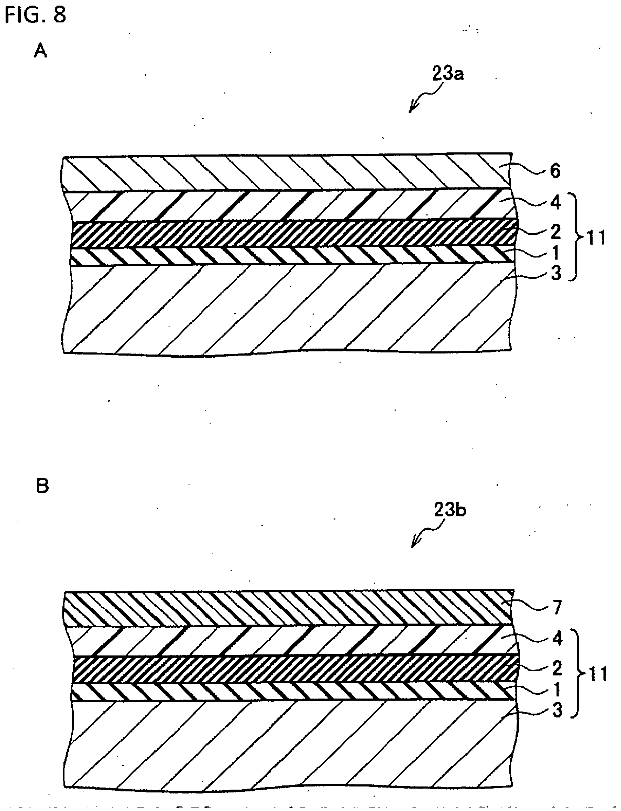

A further possible configuration includes the aluminum alloy plate 11 shown in FIG. 3, which includes an adhesive layer 4, and another aluminum alloy plate 6 including neither a first film nor a second film or a molded resin object 7 such as a molded fiber-reinforced-plastic object, another aluminum alloy plate 6 or the molded resin object 7 having been joined to the surface of the aluminum alloy plate 11 on the adhesive layer 4 side, as in the joined body 23a shown in FIG. 8A or the joined body 23b shown in FIG. 8B. In each of these joined bodies 23a and 23b, one surface of the adhesive layer 4 has been joined to the surface where the film 1 and the film 2 have been formed. Because of this, in a case where the joined bodies 23 are used as automotive members and even when the automotive members are exposed to a high-temperature moist environment, an improvement in interfacial adhesive durability is attained regardless of the kind of the adhesive, as in the case of the joined body 20 described above.

Furthermore, since the joined body 23b shown in FIG. 8B is a joined body obtained by joining the aluminum alloy plate 10 to a molded resin object 7, this joined body 23b is lightweight as compared with joined bodies each obtained by joining aluminum alloy plates to each other and is suitable for use as members of motor vehicles or other vehicles, which are required to be reduced in weight. The configurations and effects of the joined bodies 23a and 23b shown in FIG. 8A and FIG. 8B, other than those shown above, are the same as in the joined body 20 shown in FIG. 5.

[Production Process]

For producing the joined bodies 20 to 23 described above, especially for joining, use can be made of conventional joining methods. Methods for applying or disposing an adhesive 5 to an aluminum alloy plate are not particularly limited. For example, use may be made of an adhesive member produced beforehand from the adhesive 5. Alternatively, the adhesive 5 may be sprayed or otherwise applied on the surface of a film 2 having siloxane bonds, thereby forming an adhesive layer. The surfaces of the joined bodies 20 to 23 may be coated with a press oil, before being processed into automotive members, like the aluminum alloy plates 10 and 11.

In the case where the joined body according to this embodiment includes an aluminum alloy plate in which a film 1 constituted of an oxide film and a film 2 having siloxane bonds have been formed on each of both surfaces of the substrate, it is possible to further join these aluminum alloy plates or another aluminum alloy plate 6 including neither a film 1 nor a film 2 or a molded resin object 7 with the adhesive 5 or the adhesive layer 4, although this configuration is not shown in the drawings.

The joined body according to this embodiment has been configured so as to include an aluminum alloy plate in which a second film having siloxane bonds has been formed in a specific amount on a first film constituted of an oxide film that contains Mg in a specific amount, and an adhesive or an adhesive layer has been joined to that surface of this aluminum alloy plate which is on the side where the first film and the second film are present. Due to this, in a case where the joined body according to this embodiment is used as an automotive member and even when the automotive member is exposed to a high-temperature moist environment, the interface between the adhesive resin and the second film is less apt to be affected by the hydration of the first film and the aluminum-alloy substrate can be inhibited from dissolving out, since that interface has been chemically bonded and because the adhesion between the second film and the first film is excellent.

As a result, a joined body which is inhibited from suffering interfacial separation and is less apt to decrease in adhesive strength can be rendered possible. In addition, by regulating the amount of the film having siloxane bonds so as to be within a specific range, the joined body according to this embodiment can be inhibited from suffering cohesive failure within the film and can be further inhibited from decreasing in adhesive strength.

(Third Embodiment)

Next, an automotive member according to a third embodiment of the present invention is explained. The automotive member according to this embodiment includes the joined body according to the second embodiment described above. Examples thereof are automotive panels.

Processes for producing the automotive member according to this embodiment are not particularly limited, and conventional production processes can be applied. For example, cutting, pressing, etc. are given to the joined bodies 20 to 23 shown in FIGs. 5 to 8, thereby producing automotive members having given shapes.

Since the automotive member according to this embodiment is manufactured from the joined body according to the second embodiment described above, this automotive member, even when exposed to a high-temperature moist environment, is affected little by the hydration of the adhesive or adhesive layer and of the oxide film (first film) and can be inhibited from suffering dissolution of the aluminum-alloy substrate. As a result, the automotive member according to this embodiment, when exposed to a high-temperature moist environment, can be inhibited from suffering interfacial separation and from decreasing in adhesive strength.

Examples

The effect of the present invention is explained below in detail by reference to Examples according to the present invention and Comparative Examples. In the Examples, aluminum alloy plates were produced and evaluated for adhesive durability, etc., by the methods shown below and under the conditions shown below.

<No. 1 to No. 8>

A 6000-series aluminum alloy according to JIS 6016 (Mg: 0.54 mass%; Si: 1.11 mass%; Cu: 0.14 mass%) was used to produce a cold-rolled aluminum alloy plate having a thickness of 1 mm by the method described above. This cold-rolled plate was cut into a size having a length of 100 mm and a width of 25 mm, thereby obtaining substrates. Subsequently, the substrates were degreased with an alkali, thereafter heat-treated by heating to an actual maximum temperature of 550°C, and cooled.

Subsequently, the substrates were pretreated with an alkaline degreasing agent having a pH adjusted to 10 or more, a pickling solution containing sulfuric acid and having a pH of 2 or lower, an aqueous solution containing sodium silicate in an amount of 1 mass% or more, etc. In this pretreatment, the treatment period and the treatment temperature were suitably regulated. The substrates were rinsed with water within 5 minutes after the treatment with the chemicals, and were dried within 5 minutes after the rinsing with water. Thus, aluminum oxide films each having a thickness less than 20 nm were formed as first films.

Next, a silane coupling agent containing an amino group was diluted with pure water, and second films were formed while regulating the dry-basis film amount by changing the dilution ratio and the bar coater number. Thus, aluminum alloy plates Nos. 1 to 8 were produced as Examples according to the present invention. Drying after application of the silane coupling agent was performed at 100°C for 1 minute.

<No. 9>

An aluminum alloy plate No. 9 as an Example was produced in the same manner as for Nos. 1 to 8 described above, except that the amount of the second film was increased.

<No. 10>

An aluminum alloy plate No. 10, which had no second film, was produced as a Comparative Example in the same manner as for No. 9 described above, except that the treatment with a silane coupling agent was omitted.

<No. 11>

An aluminum alloy plate No. 11 as a Comparative Example was produced in the same manner as for No. 9 described above, except that an oxide film was treated only with a weakly alkaline solution (pH, 9.5) containing a silicate, without performing the pickling, and the treatment with a silane coupling agent was conducted thereafter.

<No. 12>

An aluminum alloy plate No. 12 as a Comparative Example was produced in the same manner as for No. 9 described above, except that the substrate was treated with a solution having a sodium silicate concentration of 0.1 mass% or less and then subjected to the treatment with a silane coupling agent.

<No. 13>

An aluminum alloy plate No. 12 as a Comparative Example was produced in the same manner as for No. 13 described above, except that sodium sulfate was added to the treating liquid to be used for treating and forming the first film.

<No. 14>

An aluminum alloy plate No. 14 as a Comparative Example was produced in the same manner as for No. 9 described above, except that during the formation of the first film, the period of etching was extended to excessively conduct the etching.

<Measurement of Components of the First Film>

With respect to the contents of components in each first film, an examination was made along the thickness direction by Radio Frequency Glow Discharge-Optical Emission Spectroscopy (GD-OES; Type JY-5000RF, manufactured by HORIBA Jobin Yvon GmbH.) to determine the contents of elements other than oxygen (O), nitrogen (N), and carbon (C), specifically the contents of metallic elements such as aluminum (Al), magnesium (Mg), copper (Cu), iron (Fe), and titanium (Ti) and other elements including silicon (Si) and sulfur (S).

<Determination of Amount of Film having Siloxane Bonds (Second Film)>

The amount of each second film having siloxane bonds was determined by fluorescent X-ray spectroscopy. Specifically, the silicon contained in the composite film composed of the first and the second films was quantified by fluorescent X-ray spectroscopy, and the fluorescent X-ray intensities were converted to a film amount using a calibration curve, thereby calculating the amount of the second film.

<Degree of Cohesive Failure (Adhesive Durability)>

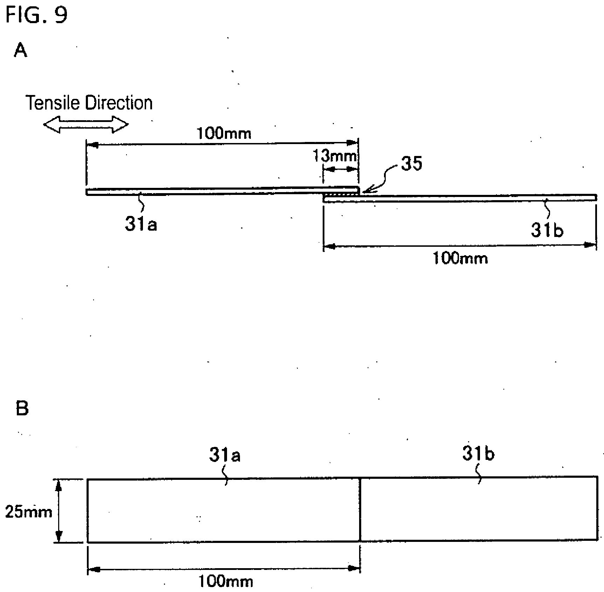

FIG. 9A and FIG. 9B are views which schematically show a method for measuring the degree of cohesive failure. FIG. 9A is a side view, and FIG. 9B is a plan view. As shown in FIG. 9A and FIG. 9B, end portions of two specimens 31 a and 31b (width, 25 mm) having the same configuration were adhered to each other with a thermosetting type epoxy resin adhesive so that the two specimens overlapped each other over a lap length of 13 mm (adhesive area: 25 mm × 13 mm). The adhesive 35 used here was a thermosetting type epoxy resin adhesive (bisphenol A epoxy resin content, 40 to 50 mass%).
Glass beads (particle diameter, 150 μm) had been added in a slight amount to the adhesive so that the adhesive 35 had a thickness of 150 μm. The adhesive 35 was dried at room temperature for 30 minutes after the overlapping, and was then heated at 170°C for 20 minutes to perform a thermosetting treatment. Thereafter, the adhesive specimens were allowed to stand at room temperature for 24 hours to produce an adhesive test specimen.
The adhesive test specimen produced was held for 30 days in a high-temperature moist environment having a temperature of 50°C and a relative humidity of 95% and then stretched with a tensile tester at a speed of 50 mm/min to evaluate the degree of cohesive failure of the adhesive in the adhered portion. The degree of cohesive failure was calculated on the basis of the following mathematical expression 1. In the following mathematical expression 1, one of the test pieces obtained after pulling the adhesive test specimen is referred to as "test piece a" and the other is referred to as "test piece b".

[Math. 1]

$$\text{Degree of cohesive failure (\%)} = 100 - \{[(\text{interfacial-separation area of test piece a})/(\text{adhesive area of test piece a})] \times 100 + [(\text{interfacial-separation area of test piece b})/(\text{adhesive area of test piece b})] \times 100\}$$

With respect to each set of test conditions, three adhesive test specimens were produced and an average for the three was taken as the degree of cohesive failure. Use was made of evaluation criteria in which adhesive test specimens having a degree of cohesive failure less than 70% were rated as poor (×), ones having a degree of cohesive failure of 70% or more and less than 80% were rated as fair (Δ), ones having a degree of cohesive failure of 80% or more and less than 90% were rated as good (o), ones having a degree of cohesive failure of 90% or more were rated as excellent (oo), and ones having a degree of cohesive failure of 95% or more were rated as highly excellent (ooo). The adhesive test specimens having a degree of cohesive failure of 70% or more were regarded as acceptable.

The results of those examinations are summarized in Table 1 below.

[Table 1]

| | No. | Components of first film | | | | Amount of second film (mg/m$^2$) | Evaluation of adhesive durability |
|---|---|---|---|---|---|---|---|
| | | Mg amount (at.%) | Si amount (at.%) | Cu amount (at.%) | S amount (at.%) | | |
| Ex. | 1 | 27 | 13 | 0.32 | 3.9 | 25 | Δ |
| | 2 | 21 | 5.3 | 0.53 | 2.8 | 18 | ○ |
| | 3 | 14 | 38 | 0.34 | 3.1 | 14 | ○ |
| | 4 | 7.6 | 18 | 0.32 | 4.6 | 12 | ○ |
| | 5 | 11 | 23 | 0.18 | 3.2 | 6.2 | ○○ |
| | 6 | 12 | 18 | 0.23 | 1.3 | 4.3 | ○○ |
| | 7 | 2.5 | 22 | 0.14 | 0.82 | 1.8 | ○○○ |
| | 8 | 4.3 | 19 | 0.20 | 0.71 | 4.1 | ○○○ |
| | 9 | 15 | 18 | 0.20 | 1.2 | 43 | Δ |
| Comp. Ex. | 10 | 35 | 10 | 0.35 | 3.2 | 16 | × |
| | 11 | 12 | 3.8 | 0.43 | 3.2 | 13 | × |
| | 12 | 18 | 12 | 0.42 | 7.0 | 8.1 | × |
| | 13 | 5.8 | 17 | 0.68 | 2.0 | 12 | × |

As shown in Table 1, the aluminum alloy plates Nos. 10 to 13, in each of which the Mg amount, Si amount, Cu amount, or S amount in the first film was outside the range according to the present invention, showed poor adhesive durability in the moist environment. In contrast, the aluminum alloy plates Nos. 1 to 9 gave satisfactory degrees of cohesive failure (adhesive durability), since each item was within the range according to the present invention. In particular, the aluminum alloy plates Nos. 5 to 8, in each of which the Mg amount, Si amount, Cu amount, or S amount in the first film was in the preferred range, showed excellent adhesive durability.

It was ascertained, from the results shown above, that according to the present invention, an aluminum alloy plate which is less apt to decrease in adhesive strength and has excellent adhesive durability even when exposed to high-temperature moist environments is rendered possible.

While the present invention has been described in detail arid with reference to specific embodiments thereof, it will be apparent to one skilled in the art that various changes and modifications can be made therein without departing from the spirit and scope thereof.

This application is based on a Japanese patent application No. 2014-031763 filed on February 21, 2014, the entire contents of which are incorporated herein by reference.

Description of the Reference Numerals and Sings

| 1 | First film |
|---|---|
| 2 | Second film |
| 3 | Substrate |
| 4 | Adhesive layer |
| 5, 35 | Adhesive |
| 6, 10, 11 | Aluminum alloy plate |
| 7 | Molded resin object |
| 20, 21a, 21b, 22, 23a, 23b | Joined body |
| 31a, 31b | Specimen |

**Claims**

1.  An aluminum alloy plate, comprising:

    an aluminum-alloy substrate; and
    a first film formed on at least one surface of the aluminum-alloy substrate and comprising an oxide film that contains Mg in an amount of 0.1 atomic % or more and less than 30 atomic % and Si in an amount of 5 atomic % or more and 40 atomic % or less and that has a Cu amount regulated to be less than 0.6 atomic % and an S amount regulated to be less than 5 atomic %.

2.  The aluminum alloy plate according to claim 1, wherein a second film is formed on at least a part of the first film, the second film being different in composition from the first film.

3.  The aluminum alloy plate according to claim 2, wherein the second film has a siloxane bond.

4.  The aluminum alloy plate according to claim 2, wherein an amount of the second film is 0.1 $mg/m^2$ or more and less than 30 $mg/m^2$.

5.  The aluminum alloy plate according to claim 2, wherein an adhesive layer comprising an adhesive is formed on the outermost surface on the side where the second film has been formed.

6.  The aluminum alloy plate according to claim 1, wherein the aluminum-alloy substrate comprises an Al-Mg alloy, an Al-Cu-Mg alloy, an Al-Mg-Si alloy, or an Al-Zn-Mg alloy.

7.  A joined body which uses the aluminum alloy plate according to any one of claims 1 to 6.

8.  The joined body according to claim 7, wherein aluminum alloy plates each of which is the aluminum alloy plate according to any one of claims 2 to 6 are joined to each other with an adhesive, so that the surfaces of the aluminum alloy plates where the first film and the second film have been formed face each other.

9.  The joined body according to claim 7, wherein another aluminum alloy plate including neither the first film nor the second film or a molded resin object is joined with an adhesive to the surface of the aluminum alloy plate according to any one of claims 2 to 6 where the first film and the second film have been formed.

10. The joined body according to claim 7, wherein the aluminum alloy plate according to claim 5 and the aluminum alloy plate according to any one of claims 2 to 4 are joined to each other with the adhesive layer, so that the surface where the adhesive layer has been formed faces the surface where the first film and the second film have been formed.

11. The joined body according to claim 7, wherein another aluminum alloy plate including neither the first film nor the second film or a molded resin object is joined to the surface of the aluminum alloy plate according to claim 5 where the adhesive layer has been formed.

12. An automotive member manufactured by using the joined body according to claim 7.

13. An automotive member manufactured by using the joined body according to claim 8.

14. An automotive member manufactured by using the joined body according to claim 9.

15. An automotive member manufactured by using the joined body according to claim 10.

16. An automotive member manufactured by using the joined body according to claim 11.

FIG. 1

FIG. 2

FIG. 3

11

4
2
1

3

FIG. 4

| Substrate Production Step | S1 |

↓

| First-Film Formation Step | S2 |

↓

| Second-Film Formation Step | S3 |

↓

| Adhesive Layer Formation Step | S4 |

↓

Aluminum Alloy Plate 11

FIG. 5

FIG. 6

A

21a

6
5
2
1
3
} 10

B

21b

7
5
2
1
3
} 10

FIG. 7

FIG. 8

A

23a

6
4
2
1
3
11

B

23b

7
4
2
1
3
11

FIG. 9

A

Tensile Direction

100mm

13mm

35

31a

31b

100mm

B

31a

31b

25mm

100mm

**INTERNATIONAL SEARCH REPORT**

| | International application No. |
|---|---|
| | PCT/JP2015/054693 |

A. CLASSIFICATION OF SUBJECT MATTER
*C23C28/04*(2006.01)i, *B32B15/08*(2006.01)i, *B32B15/20*(2006.01)i, *C22C21/02*
(2006.01)i, *C22C21/06*(2006.01)i

According to International Patent Classification (IPC) or to both national classification and IPC

B. FIELDS SEARCHED

Minimum documentation searched (classification system followed by classification symbols)
C23C28/04, B32B15/08, B32B15/20, C22C21/02, C22C21/06

Documentation searched other than minimum documentation to the extent that such documents are included in the fields searched
Jitsuyo Shinan Koho        1922–1996   Jitsuyo Shinan Toroku Koho   1996–2015
Kokai Jitsuyo Shinan Koho  1971–2015   Toroku Jitsuyo Shinan Koho   1994–2015

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2013-166975 A  (Kobe Steel, Ltd.),<br>29 August 2013 (29.08.2013),<br>claims; paragraphs [0001] to [0010], [0028] to [0035], [0057] to [0069]<br>(Family: none) | 1-3,5-8,10,<br>12-13,15<br>4,7-16 |
| Y | JP 2003-342790 A  (Mitsubishi Aluminum Co., Ltd.),<br>03 December 2003 (03.12.2003),<br>claims 1 to 2; paragraphs [0001] to [0005], [0013], [0027]<br>(Family: none) | 4,7-16 |

☒ Further documents are listed in the continuation of Box C.   ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>01 May 2015 (01.05.15) | Date of mailing of the international search report<br>19 May 2015 (19.05.15) |
|---|---|
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (July 2009)

**INTERNATIONAL SEARCH REPORT**

| International application No. |
| --- |
| PCT/JP2015/054693 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y | JP 2013-159806 A (Kobe Steel, Ltd.), 19 August 2013 (19.08.2013), claims; paragraphs [0001] to [0010], [0051] to [0059]; fig. 3 & CN 103243244 A & KR 10-2013-0090371 A | 9,11,14,16 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H06256881 A
- JP 2006200007 A
- JP 2007217750 A
- JP H08144064 A
- JP H07188956 A
- JP 2014031763 A